(19) Europäisches Patentamt
European Patent Office
Office européen des brevets

(11) Veröffentlichungsnummer: **0 429 395 B1**

(12) **EUROPÄISCHE PATENTSCHRIFT**

(45) Veröffentlichungstag der Patentschrift: **29.03.95**

(51) Int. Cl.$^6$: **C08G 59/56**, C08G 59/66, C08L 63/00, C08J 5/24

(21) Anmeldenummer: **90810873.1**

(22) Anmeldetag: **13.11.90**

(54) **Härtbare Epoxidharz-Stoffgemische enthaltend einen latenten Härter, ein Amin und ein Thiol.**

(30) Priorität: **21.11.89 CH 4170/89**

(43) Veröffentlichungstag der Anmeldung:
**29.05.91 Patentblatt 91/22**

(45) Bekanntmachung des Hinweises auf die Patenterteilung:
**29.03.95 Patentblatt 95/13**

(84) Benannte Vertragsstaaten:
**AT CH DE ES FR IT LI**

(56) Entgegenhaltungen:
**EP-A- 0 329 093**
**EP-A- 0 370 446**
**US-A- 4 126 505**

(73) Patentinhaber: **CIBA-GEIGY AG**
**Klybeckstrasse 141**
**CH-4002 Basel (CH)**

(72) Erfinder: **Setiabudi, Frans, Dr.**
**Kapellenstrasse 7**
**W-7812 Bad Krozingen (DE)**
Erfinder: **Gruber Urs, Dr.**
**Zinnhagweg 25**
**CH-4144 Arlesheim (CH)**

**EP 0 429 395 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft härtbare Stoffgemische enthaltend ein Epoxidharz und bestimmte latente Härter, Amine und Thiole und die daraus hergestellten vernetzten Produkte, insbesondere Prepregs und Laminate.

Für die Herstellung von Prepregs auf der Basis von Epoxidharzen ohne Verwendung von Lösungsmitteln werden im allgemeinen Mischungen von niederviskosen, flüssigen und hochviskosen bis festen Epoxidharzen eingesetzt. Um diese in wenig klebrige bis trockene Prepregs überführen zu können, müssen sie unter äusserst streng kontrollierten Bedingungen mit Härtern teilweise vorreagiert werden. Man spricht hier üblicherweise von der sogenannten B-Stufenbildung. Im allgemeinen werden mindestens zwei Härter mit unterschiedlicher Reaktivität eingesetzt. Bei den bisherigen Methoden weisen die eingesetzten Härter keine ausreichende Reaktivitätsdifferenz auf, so dass nach der Vorreaktion mit dem bei tieferer Temperatur reagierenden Härter (Erreichen der B-Stufe) die Vernetzung unerwünschterweise auch bei Raumtemperatur weiter fortschreitet und die Prepregs somit nur eine sehr begrenzte Lagerstabilität haben. Solche Prepregs genügen den heutigen Anforderungen auch in Bezug auf Flexibilität und Klebrigkeit nicht. Erfahrungsgemäss ist es sehr schwierig die B-Stufenbildung genau zu reproduzieren, was zu unerwünschten Qualitätsschwankungen z.B. bezüglich Klebrigkeit, Flexibilität und Lagerstabilität der Prepregs führt.

Es wurde nun ein Epoxidharz-Bindemittel entwickelt, welches die beschriebenen Nachteile nicht aufweist. Das neue Epoxidharzgemisch zeichnet sich durch eine vollständige Trennung der Härterreaktivität der B-Stufe von der C-Stufe aus, so dass sich die Stabilität der B-Stufe und somit auch die Lagerfähigkeit der Prepregs von einigen Tagen auf mehrere Monate verlängern lässt. Zudem weisen die Prepregs als Folge des für die Herstellung der B-Stufe verwendeten Amin-Thiol-Härtergemisches eine erhöhte Flexibilität auf, welche sich bei geeigneter Wahl des Amins und des Thiols fast beliebig einstellen lässt.

Gegenstand der Erfindung sind härtbare Stoffgemische enthaltend

(a) ein Epoxidharz,

(b) einen latenten Härter für das Epoxidharz, der erst bei einer Temperatur von mindestens 80 °C zu reagieren anfängt (gemessen mittels DSC bei einer Aufheizgeschwindigkeit von 10 °C/min),

(c) ein Amin mit mindestens einem Aminwasserstoff und

(d) ein Thiol mit mindestens einer SH-Gruppe,

wobei entweder das Amin (c) mindestens zwei an ein oder mehrere Stickstoffatome gebundene Wasserstoffatome hat oder das Thiol (d) mindestens zwei SH-Gruppen aufweist, und wobei der Unterschied der Reaktionsmaxima im DSC-Diagramm bei einer Aufheizgeschwindigkeit von 10 °C/min mindestens 30 °C beträgt.

Beim Erhitzen solcher Gemische in einer DSC-Apparatur (DSC = Differential Scanning Calorimeter) zeigt das DSC-Diagramm (Reaktionsenthalpie in Abhängigkeit von der Temperatur) zwei ausgeprägte Maxima und eine klare Basislinien-Trennung. Das erste Reaktionsmaximum ist auf die Umsetzung des Harzes mit dem Amin-Thiol-Gemisch (B-Stufe) zurückzuführen und liegt je nach gewählter Zusammensetzung beispielsweise im Bereich von etwa 80 bis etwa 130 °C. Das zweite Maximum resultiert aus der Vernetzung mit dem latenten Härter und liegt beispielsweise im Bereich von etwa 100 bis 200, vorzugsweise etwa 130 bis 160 °C.

Je grösser der Temperaturunterschied der zwei Reaktionsmaxima, desto grösser ist die Lagerstabilität der mit dem Gemisch hergestellten Prepregs. Stoffgemische, worin der Unterschied der Reaktionsmaxima mindestens 40 °C, insbesondere mindestens 50 °C ist, werden daher bevorzugt.

Die GB-Patentschrift 1,350,156 beschreibt die Vorverlängerung von Epoxidharzen mit Verbindungen, welche OH- oder SH-Gruppen enthalten, in Gegenwart bestimmter Bortrifluorid-Amin-Komplexe. Die vorverlängerten Harze werden mit den üblichen Härtern für Epoxidharze, wie z.B. Aminen, Anhydriden oder katalytischen Härtern, vernetzt und als Giessharze, Klebstoffe oder Dichtungsmassen eingesetzt.

Als Epoxidharz (a) der erfindungsgemässen Stoffgemische kann im Prinzip jede in der Technik der Epoxidharze übliche Verbindung eingesetzt werden.

Beispiele für Epoxidharze sind:

I) Polyglycidyl und Poly($\beta$-methylglycidyl)ester erhältlich durch Umsetzung einer Verbindung mit mindestens zwei Carboxylgruppen im Molekül und Epichlorhydrin bzw. $\beta$-Methyl-epichlorhydrin. Die Umsetzung erfolgt zweckmässig in der Gegenwart von Basen.

Als Verbindung mit mindestens zwei Carboxylgruppen im Molekül können aliphatische Polycarbonsäuren verwendet werden. Beispiele für diese Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.

Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.

Weiterhin können aromatische Polycarbonsäuren Verwendung finden, wie beispielsweise Phthalsäure, Isophthalsäure oder Terephthalsäure.

II) Polyglycidyl- oder Poly(β-methylglycidyl)ether erhältlich durch Umsetzung einer Verbindung mit mindestens zwei freien alkoholischen Hydroxygruppen und/oder phenolischen Hydroxygruppen und Epichlorhydrin oder β-Methylepichlorhydrin unter alkalischen Bedingungen, oder in Anwesenheit eines sauren Katalysators und anschliessende Alkalibehandlung.

Ether dieses Typs leiten sich beispielsweise ab von acyclischen Alkoholen, wie Ethylenglykol, Diethylenglykol und höheren Poly(oxyethylen)glykolen, Propan-1,2-diol oder Poly(oxypropylen)glykolen, Propan-1,3-diol, Butan-1,4-diol, Poly(oxytetramethylen)glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen.

Sie leiten sich aber auch beispielsweise ab von cycloaliphatischen Alkoholen, wie 1,4-Cyclohexandimethanol, Bis(4-hydroxycyclohexyl)methan oder 2,2-Bis(4-hydroxycyclohexyl)propan, oder sie besitzen aromatische Kerne, wie N,N-Bis(2-hydroxyethyl)anilin oder p,p'-Bis(2-hydroxyethylamino)diphenylmethan.

Die Epoxidverbindungen können sich auch von einkerningen Phenolen ableiten, wie beispielsweise von Resorcin oder Hydrochinon; oder sie basieren auf mehrkernigen Phenolen, wie beispielsweise Bis(4-hydroxyphenyl)methan, 4,4'-Dihydroxybiphenyl, Bis(4-hydroxyphenyl)sulfon, 1,1,2,2-Tetrakis(4-hydroxyphenyl)ethan, 2,2-Bis(4-hydroxyphenyl)propan, 2,2-Bis(3,5-dibrom-4-hydroxyphenyl)propan sowie von Novolaken erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder $C_1$-$C_9$-Alkylgruppen substituiert sind, wie beispielsweise 4-Chlorphenol, 2-Methylphenol oder 4-tert-Butylphenol oder durch Kondensation mit Bisphenolen, so wie oben beschrieben.

III) Poly(N-glycidyl)verbindungen erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis(4-aminophenyl)methan, m-Xylylendiamin oder Bis(4-methylaminophenyl)methan.

Zu den Poly(N-glycidyl)verbindungen zählen aber auch Triglycidylisocyanurat, N,N'-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.

IV) Poly(S-glycidyl)verbindungen, beispielsweise Di-S-glycidylderivate, die sich von Dithiolen, wie beispielsweise Ethan-1,2-dithiol oder Bis(4-mercaptomethylphenyl)ether ableiten.

V) Cycloaliphatische Epoxidharze, beispielsweise Bis(2,3-epoxycyclopentyl)ether, 2,3-Epoxycyclopentylglycidylether, 1,2-Bis(2,3-epoxycyclopentyloxy)ethan oder 3,4-Epoxycyclohexylmethyl-3',4'-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis(5,5-dimethyl-1-glycidylhydantoin-3-yl)propan.

Bevorzugt verwendet werden Epoxidharze mit einem Epoxidgehalt von 2 bis 10 Aequivalenter/kg, welche Glycidylether, Glycidylester oder N-Glycidylderivate von aromatischen, heterocyclischen, cycloaliphatischen oder aliphatischen Verbindungen sind.

Besonders bevorzugt als Epoxidharze werden Polyglycidylether von mehrwertigen Phenolen, wie beispielsweise von 2,2-Bis(4-hydroxyphenyl)propan (Bisphenol A) oder Bis(4-hydroxyphenyl)methan (Bisphenol F) oder von Novolaken. Die verwendeten Epoxidharze sind vorzugsweise flüssig, d.h. es handelt sich entweder um flüssige Harze oder um flüssige Gemische fester und flüssiger Harze.

Am meisten bevorzugt als Epoxidharze werden Diglycidylether von Bisphenol A oder Bisphenol F, Epoxikresolnovolake oder 4,4'-Diaminodiphenylmethan-Tetraglycidylderivate.

Als latenter Härter (b) kann im Prinzip jede für diesen Zweck bekannte Verbindung, welche der erfindungsgemässen Definition genügt, eingesetzt werden, d.h. jede Verbindung, welche dem Epoxidharz gegenüber unterhalb der definierten Grenztemperatur von 80 °C inert ist, die aber schnell unter Vernetzung des Harzes reagiert, sobald diese Grenztemperatur überschritten ist. Die Grenztemperatur der erfindungsgemäss verwendeten latenten Härter ist vorzugsweise mindestens 85 °C, insbesondere mindestens 100 °C. Solche Verbindungen sind wohlbekannt und auch im Handel erhältlich.

Beispiele geeigneter latenter Härter sind Dicyandiamid, Cyanoguanidine, wie z.B. die in den US 4,859,761 oder EP-A 306,451 beschriebenen Verbindungen, aromatische Amine, wie z.B. 4,4'- oder 3,3'-Diaminodiphenylsulfon, oder Guanidine, wie z.B. 1-o-Tolylbiguanid, oder modifizierte Polyamine, wie z.B. Ancamine® 2014 S (Anchor Chemical UK Limited, Manchester).

Geeignete latente Härter sind auch N-Acylimidazole, wie z.B. 1-(2',4',6'-Trimethylbenzoyl)-2-phenylimidazol oder 1-Benzoyl-2-isopropylimidazol. Solche Verbindungen sind beispielsweise in den US 4,436,892, US 4,587,311 oder der JP-PS 743,212 beschrieben.

Weitere geeignete Härter sind Metallsalzkomplexe von Imidazolen, wie z.B. in der US 3,678,007 oder US 3,677,978 beschrieben, Carbonsäurehydrazide, wie z.B. Adipinsäuredihydrazid, Isophthalsäuredihydrazid oder Anthranilsäurehydrazid, Triazinderivate, wie z.B. 2-Phenyl-4,6-diamino-s-triazin (Benzoguanamin) oder 2-Lauryl-4,6-diamino-s-triazin (Lauroguanamin) sowie Melamin und dessen Derivate. Die letztgenannten Verbindungen sind z.B. in der US 3,030,247 beschrieben.

Als latente Härter geeignet sind auch Cyanacetylverbindungen, wie z.B. in der US 4,283,520 beschrieben, beispielsweise Neopentylglykolbiscyanessigester, Cyanessigsäure-N-isobutylamid, 1,6-Hexamethylen-bis-cyanacetat oder 1,4-Cyclohexandimethanol-bis-cyanacetat.

Geeignete latente Härter sind auch N-Cyanacylamid-Verbindungen wie z.B. N,N'-Dicyanadipinsäurediamid. Solche Verbindungen sind z.B. in den US 4,529,821, US 4,550,203 und US 4,618,712 beschrieben.

Weitere geeignete latente Härter sind die in der US 4,694,096 beschriebenen Acylthiopropylphenole und die in der US 3,386,955 offenbarten Harnstoffderivate wie beispielsweise Toluol-2,4-bis(N,N-dimethylcarbamid).

Bevorzugte latente Härter sind 4,4'-Diaminodiphenylsulfon und insbesondere Dicyandiamid.

Falls zweckmässig, können die erfindungsgemässen Stoffgemische auch Beschleuniger (e) für die Vernetzungsreaktion mit dem latenten Härter enthalten. Geeignete Beschleuniger (e) sind z.B. Harnstoffderivate, wie N,N-Dimethyl-N'-(3-chlor-4-methylphenyl)harnstoff (Chlortoluron), N,N-Dimethyl-N'-(4-chlorphenyl)-harnstoff (Monuron) oder N,N-Dimethyl-N'-(3,4-dichlorphenyl)harnstoff (Diuron), 2,4-Bis(N',N'-dimethylureido)toluol oder 1,4-Bis(N',N'-dimethylureido)benzol. Die Verwendung dieser Verbindungen ist beispielsweise in der oben erwähnten US 4,283,520 beschrieben. Als Beschleuniger geeignet sind z.B. auch die in der GB 1,192,790 beschriebenen Harnstoffderivate.

Geeignete Beschleuniger sind auch Imidazole, wie z.B. Imidazol, 2-Ethyl-, 2-Phenyl-, 1-Methylimidazol, 1-Cyanoethyl-2-ethyl-4-methylimidazol oder 2-Ethyl-4-methylimidazol.

Weitere geeignete Beschleuniger sind auch tertiäre Amine, deren Salze oder quaternäre Ammoniumverbindungen, wie Benzyldimethylamin, 2,4,6-Tris(dimethylaminomethyl)phenol, 4-Aminopyridin, Tripentylammoniumphenolat, Tetramethylammoniumchlorid oder Benzyltributylammoniumbromid oder -chlorid; oder Alkalimetallalkoholate, wie Na-Alkoholate von 2,4-Dihydroxy-3-hydroxymethylpentan.

Als Beschleuniger eignen sich ebenfalls die in der EP-A 200 678 beschriebenen festen Lösungen aus einer Stickstoffbase und einem Phenol-Aldehyd-Harz, sowie die in der EP-A 351 365 offenbarten Mannich-Basen von polymeren Phenolen.

Bevorzugte Beschleuniger (e) sind Imidazole oder Harnstoffderivate.

Die Aminkomponente (c) der erfindungsgemässen Stoffgemische kann, wie erwähnt, jedes Amin mit mindestens einem Aminwasserstoff sein. Um gute Resultate zu erreichen, muss jedoch entweder das Amin (c) oder das Thiol (d) mindestens drei gegenüber dem Epoxidharz aktive Wasserstoffatome aufweisen. Beim Amin (c) müssen diese an mindestens zwei Stickstoffatome gebunden sein. Solange diese Bedingung erfüllt ist, kommt im Prinzip jedes Amin in Frage. Die Amine können ein oder mehrere primäre, sekundäre oder tertiäre Stickstoffatome enthalten.

Beispiele für geeignete Amine (c) sind aliphatische, cycloaliphatische, aromatische und heterocyclische Amine, wie Bis(4-aminophenyl)methan, Anilin-Formaldehyd-Harze, Benzylamin, n-Octylamin, Propan-1,3-diamin, 2,2-Dimethyl-1,3-propandiamin (Neopentandiamin), Hexamethylendiamin, Diethylentriamin, Bis(3-aminopropyl)amin, N,N-Bis(3-aminopropyl)methylamin, Triethylentetramin, Tetraethylenpentamin, Pentaethylenhexamin, 2,2,4-Trimethylhexan-1,6-diamin, m-Xylylendiamin, 1,2- und 1,4-Diaminocyclohexan, Bis(4-aminocyclohexyl)methan, Bis(4-amino-3-methylcyclohexyl)methan, 2,2-Bis(4-aminocyclohexyl)propan und 3-Aminomethyl-3,5,5-trimethylcyclohexylamin (Isophorondiamin), Polyaminoimidazoline sowie Polyaminoamide, wie beispielsweise solche aus aliphatischen Polyaminen und dimerisierten oder trimerisierten Fettsäuren. Geeignete Amine (c) sind auch die als Jeffamine® bekannten Polyoxyälkylenamine der Firma Texaco, wie z.B. Jeffamine® EDR 148, D 230, D 400 oder T 403.

Weitere geeignete Amine sind 1,14-Diamino-4,11-dioxatetradecan, Dipropylentriamin, 2-Methyl-1,5-pentandiamin, N,N'-Dicyclohexyl-1,6-hexandiamin, N,N'-Dimethyl-1,3-diaminopropan, N,N'-Diethyl-1,3-diaminopropan, N,N-Dimethyl-1,3-diaminopropan, sekundäre Polyoxypropylendi- und -triamine, wie z.B. die EPS 7315 und EPS 7325 Produkte der Texaco, 2,5-Diamino-2,5-dimethyihexan, Bis(aminomethyl)-tricyclopentadien, m-Aminobenzylamin, 1,8-Diamino-p-menthan, Bis(4-amino-3,5-dimethylcyclohexyl)-methan, 1,3-Bis(aminomethyl)cyclohexan, Dipentylamin, Bis(4-amino3,5-diethylphenyl)methan, 3,5-Diethyltoluol-2,4-diamin und 3,5-Diethyltoluol-2,6-diamin.

Bei Verwendung von cycloaliphatischen oder aliphatischen Aminen werden vorzugsweise keine Glycidylester als Harzkomponente eingesetzt.

Die verwendeten Amine (c) haben vorzugsweise mindestens eine, insbesondere mindestens zwei $NH_2$-Gruppen.

Bevorzugt als Komponente (c) der erfindungsgemässen Stoffgemische sind cycloaliphatische oder aliphatische Amine. Unter den cycloaliphatischen Aminen besonders bevorzugt sind 1,2-Diaminocyclohexan, 3-Aminomethyl-3,5,5-trimethylcyclohexylamin (Isophorondiamin), Bis(4-aminocyclohexyl)methan und Polyaminoimidazoline, wie beispielsweise das als Eurodur® 370 vertriebene Polyaminoimidazolin der Firma Schering AG. Unter den aliphatischen Aminen (c) werden Verbindungen der Formeln I bis VI bevorzugt

$H_2N\text{-}R\text{-}NH_2$ (I), $H_2N{(}CH_2CH_2O)_aCH_2CH_2NH_2$ (II),

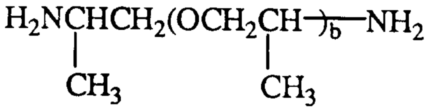 (III), 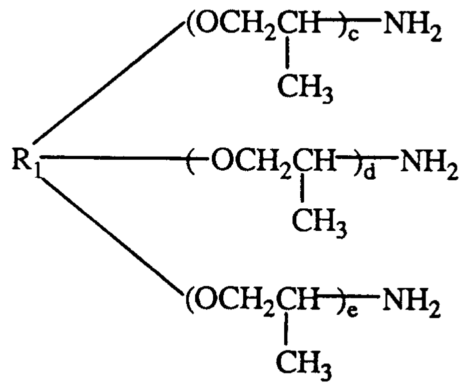 (IV),

$H_2N(CH_2CH_2CH_2NH)_fCH_2CH_2CH_2NH_2$ (V), $H_2N(CH_2CH_2NH)_gCH_2CH_2NH_2$ (VI),

worin R ein geradkettiger oder verzweigter $C_2$-$C_{10}$-Alkylenrest ist, a eine ganze Zahl von 1-10, vorzugsweise 2, b eine ganze Zahl von 1-10, vorzugsweise 2-6, c, d, und e unabhängig voneinander eine ganze Zahl von 1-20, vorzugsweise 2-5, feine ganze Zahl von 1-5, vorzugsweise 1 und g eine ganze Zahl von 1-10, vorzugsweise 1-5, sind und $R_1$ für einen dreiwertigen Rest der Formeln

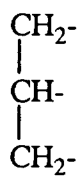

oder insbesondere

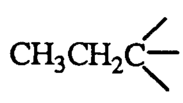

steht.

Ganz besonders bevorzugt werden 2,2,4-Trimethylhexan-1,6-diamin, Jeffamine® EDR 148 der Formel II mit a = 2, Jeffamine® D 230 bzw. D 400 der Formel III mit b = 2-3 bzw. b = 5-6, Jeffamine® T 403 der Formel IV, Bis(3-aminopropyl)amin, Diethylentriamin, Triethylentetramin, 2,2-Dimethyl-1,3-propandiamin und Pentaethylenhexamin.

Am meisten bevorzugte Amine sind n-Octylamin, 4,4'-Diaminodicyclohexylmethan, Jeffamine® EDR-148, Laromin® C-260 (BASF, 3,3'-Dimethyl-4,4'-diaminodicyclohexylmethan), 1,2-Diaminocyclohexan und Isophorondiamin.

Die Amine (c) wirken zusammen mit den Thiolen (d) als Härtungsmittel in der ersten Stufe der Vernetzung. Als Thiol (d) kann im allgemeinen jede geeignete Verbindung mit mindestens einer, vorzugsweise zwei oder drei SH-Gruppen eingesetzt werden. Geeignete Thiole (d) sind z.B. Triglykoldimercaptan

oder 1,2-Bis(2'-Mercaptoethoxy)ethan, die unter dem Namen Thiokole® bekannten polymeren Polysulfide der Formel $HS(CH_2CH_2OCH_2OCH_2CH_2SS)_nCH_2CH_2OCH_2OCH_2CH_2SH$, Trimethylolpropantrithioglykolat und weitere Thioglykolate, wie z.B. die in der US 3,352,810 beschriebenen Verbindungen, aliphatische und cycloaliphatische Dithiole der in den US 3,716,588, US 3,734,968, US 3,718,700 und US 3,278,496 beschriebenen Art, Poly(mercaptoalkyl)aromaten, wie in der US 3,310,527 beschrieben, Alkylendithiole oder Hydroxyälkylendithiole der in der US 3,363,026 beschriebenen Art, Dipentaerythrit-hexa(3-mercaptopropionat), Monothiole, wie z.B. Cetylthiol, Benzylthiol, Pentylthiol, Hexylthiol, Octylthiol oder Decylthiol oder Trithiole, wie z.B. 2,4,6-s-Triazintrithiol.

Bevorzugte Thiole (d) sind Polyoxyalkylenderivate, insbesondere Polyoxyälkylendithiole oder -trithiole. Dabei kann es sich z.B. um Polyethylenglykol-Derivate, um Polypropylenglykol-Derivate oder auch um Copolymere mit Oxyethylen- und Oxypropyleneinheiten handeln. Die Copolymere können Blockpolymere oder statistische Polymere sein. Die entsprechenden Blockpolymere werden manchmal auch Polypropylenglykolethoxylat bzw. Polyethylenglykolpropoxylat genannt, je nachdem, ob sie enständige Polyethylenglykol- oder Polypropylenglykolblöcke aufweisen. Die im Handel erhältlichen Polypropylenglykole weisen vorwiegend sekundäre enständige Hydroxylgruppen auf; es versteht sich von selber, dass auch Polypropylen-Dithiole mit primären Thiolgruppen verwendet werden können.

Weitere geeignete Dithiole werden von Polytetrahydrofurandiolen abgeleitet. Polytetrahydrofurandiole sind bekannt und auch im Handel erhältlich. Beispiele solcher Produkte sind Poly-THF 650®, Poly-THF 1000® oder Poly-THF 2000® der BASF. Diese käuflichen Diole können beispielsweise durch Umsetzung mit Thionylchlorid in ein Dichlorderivat übergeführt werden, welches mit Thioharnstoff zum entsprechenden Isothiuroniumchlorid und anschliessend durch Hydrolyse dieses Produktes zum Dithiol umgesetzt wird. Die geschilderte Umsetzung von Alkoholen zu Thiolen wird z.B. in Organic Synthesis, Collective Volume 3, Seiten 698-700 und Collective Volume 4, Seiten 401-403, Wiley, New York, 1955 bzw. 1963 beschrieben.

Geeignete Thiole (d) sind auch die unter der Bezeichnung CapCure® (Henkel Napco AG) vertriebenen Polyoxyalkylen-Derivate wie z.B. CapCure® WR-6 oder WR-36, insbesondere CapCure® 3-800 der Formel

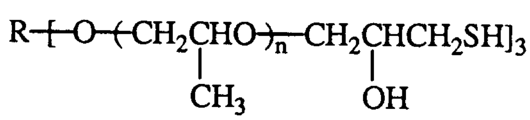

mit n = 1-2 und R gleich einem dreiwertigen Rest eines aliphatischen Kohlenwasserstoffs.

Besonders geeignete Dithiole sind Verbindungen der Formeln

$$HS(CH_2CH_2O)_{7\text{-}8}CH_2CH_2SH \text{ und } HS(CH_2CH_2CH_2CH_2O)_m CH_2CH_2CH_2CH_2SH$$

mit m = 7-8, 12-13 oder 26-27.

Am meisten bevorzugt sind Triglykoldimercaptan, CapCure® 3-800 und Trimethylolpropantrithioglykolat.

Die erfindungsgemässen Gemische können, falls zweckmässig, noch Beschleuniger für die Amin/Thiol-Härtung enthalten, wie z.B. Phenole, wie Nonylphenol oder Resorcin, oder organische Säuren, wie p-Toluolsulfonsäure.

Die Mengenverhältnisse der Komponenten der erfindungsgemässen Stoffgemische können je nach spezifischer Zusammensetzung stark variieren. Geeignete Mengen des latenten Härters liegen z.B. im Bereich von etwa 3-60, vorzugsweise etwa 6-30 Gewichtsteilen pro 100 Gewichtsteile des Epoxidharzes.

Bevorzugt werden im allgemeinen Gemische, bei denen etwa 5-50 %, insbesondere etwa 10-35 % der Epoxidgruppen des Harzes bei der Herstellung der B-Stufe mit dem Amin/Thiolgemisch vernetzt werden, und die restlichen Epoxidgruppen mit dem latenten Härter gehärtet werden.

Auch das Aequivalenzverhältnis der NH- zu den SH-Gruppen kann stark variieren, je nach Art des verwendeten Thiols bzw. Amins und je nach dem, welche Eigenschaften der B-Stufe erwünscht sind. Als geeignet haben sich z.B. NH/SH-Aequivalenzverhältnisse von etwa 15:1 bis etwa 1:6, vorzugsweise von etwa 10:1 bis etwa 1:3 erwiesen.

Die eingesetzten Mengen der Komponenten (c) und (d) werden auch vom Anwendungszweck, d.h. von der erwünschten Flexibilität der B-Stufe sowie von der gewünschten Gebrauchsdauer des Stoffgemisches abhängen. Im allgemeinen steigt sowohl die Flexibilität als auch die Gebrauchsdauer mit der Erhöhung der relativen Mengen des Thiols im Thiol/Amin-Gemisch.

Die Mengen des gegebenenfalls beigefügten Beschleunigers (e) für die Härtung mit dem latenten Härter (b) oder des Beschleunigers für die Härtung mit dem Amin (c) und dem Thiol (d) sind für jede Art

des Beschleunigers dem Fachmann bekannt.

Beispiele für geeignete Mengen der einzelnen Komponenten der erfindungsgemässen Stoffgemische sind aus den Zusammensetzungen der Ausführungsbeispiele ersichtlich.

Die erfindungsgemässen Gemische können auch aus einer Lösung, beispielsweise in Methylethylketon, heraus verarbeitet werden, wobei sich die Temperatur für die B-Stufen- und die C-Stufen-Härtung nicht ändert.

Gewünschtenfalls kann man den härtbaren Gemischen zur Herabsetzung der Viskosität reaktive Verdünner, wie z.B. Butandioldiglycidylether, Monoglycidylether isomerer höherer Alkohole, wie z.B. Grilonit RV 1814® der Fa. Ems-Chemie oder Butylglycidylether, 2,2,4-Trimethylpentylglycidylether, Phenylglycidylether, Kresylglycidylether oder Glycidylester zusetzen.

Die erfindungsgemässen Stoffgemische können auch Haftvermittler enthalten. Im Prinzip kann jeder bekannte Haftvermittler verwendet werden. Als besonders geeignete Haftvermittler haben sich Silane, wie z.B. $\gamma$-Glycidyloxypropyltrimethoxysilan (Silan A-187 der Fa. Union Carbide) oder $\gamma$-Mercaptopropyltrimethoxysilan (Silan A-189 der Fa. Union Carbide) oder Titanverbindungen, wie Tetraisopropyl-bis-(dioctylphosphonato)-titanat (KR 41B der Fa. Kenrich Petrochemicals, Inc. USA) erwiesen.

Als weitere übliche Zusätze können die erfindungsgemässen Gemische ferner Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite, Wollastonit, Kaolin, Kieselsäureaerogel oder Metallpulver, z.B. Aluminiumpulver oder Eisenpulver, ferner Pigmente und Farbstoffe, wie Russ, Oxidfarben und Titandioxid, Flammschutzmittel, Thixotropiemittel, Verlaufmittel ("flow control agents"), wie Silicone, Wachse und Stearate, die zum Teil auch als Formtrennmittel Anwendung finden, Antioxidantien und Lichtschutzmittel enthalten.

Die Herstellung der erfindungsgemässen Stoffgemische kann in üblicher Weise durch Vermischen der Komponenten mit Hilfe bekannter Mischaggregate (Rührer, Walzen) erfolgen.

Die erfindungsgemässen Gemische lassen sich beispielsweise als Klebstoffe (Klebfilme, Hot-melts, Pasten, Ein-Komponenten-Kleber, Patches), Matrixharze, Lacke, Dichtungsmassen oder Injektionsmassen oder ganz allgemein zur Herstellung von gehärteten Produkten verwenden. Sie können in jeweils dem speziellen Anwendungsgebiet angepasster Formulierung, in ungefülltem oder gefülltem Zustand, z.B. als Dichtungsmassen, Anstrichmittel, Beschichtungsmassen, Lacke, Tauchharze, Giessharze und insbesondere als Imprägnierharze, Laminierharze, Matrixharze und Klebemittel verwendet werden.

Die Erfindung betrifft daher auch vernetzte Produkte erhältlich durch Härtung der erfindungsgemässen Stoffgemische.

Die Härtung der Stoffgemische erfolgt vorzugsweise im Temperaturbereich von etwa 80-180 °C. Nach z.B. etwa 2-10 Minuten bei 90-120 °C ist die Härtungsreaktion mit dem Amin/Thiol-Härter abgeschlossen, und es wird ein lagerstabiles, unkritisches B-Stufen-System erhalten, welches eine ausgezeichnete Flexibilität und Klebrigkeit aufweist. Die vollständige Vernetzung unter Formgebung erfolgt vorzugsweise bei etwa 100-180 °C während etwa 20-60 Minuten.

Die vernetzten Systeme weisen ausgezeichnete mechanische und thermische Eigenschaften auf, auch wenn die vollständige Härtung erst nach längerer Lagerung (mehrere Wochen bis Monate) der härtbaren Gemische oder der B-Stufe erfolgt.

Wie erwähnt, eignen sich die erfindungsgemässen Stoffgemische insbesondere als Imprägnierharze für die Herstellung von Faserverbundmaterialien. Gegenstand der Erfindung sind somit auch Faserverbundmaterialien imprägniert mit einem erfindungsgemässen Stoffgemisch, Prepregs erhältlich durch Imprägnierung eines Gewebes mit einem Stoffgemisch und anschliessendes Erhitzen des imprägnierten Gewebes bis die Reaktion des Epoxidharzes (a) mit dem Amin (c) und dem Thiol (d) abgeschlossen ist, und ohne dass dabei die Umsetzung des Epoxidharzes (a) mit dem latenten Härter (b) einsetzt, sowie die durch vollständige Aushärtung der Prepregs erhältlichen Laminate.

Weiterhin können die erfindungsgemässen Stoffgemische als Klebstoffe, insbesondere Hotmelt-Reaktionskleber und Klebfilme, eingesetzt werden. Nach der Bildung der B-Stufe bei einer Temperatur zwischen 25 und 50 °C erhält man lagerstabile Klebstoffpasten, die mit oder ohne Zusatz von Füllstoffen verarbeitet werden können. Die Viskosität des Klebstoffs kann durch den Anteil an B-Stufe beliebig variiert werden.

Die folgenden Beispiele erläutern die Erfindung.

<u>Beispiele 1-11</u>

In den in Tabelle 1 definierten <u>Zusammensetzungen</u> werden die folgenden Komponenten eingesetzt:

<u>Epoxidharz 1:</u> Ein Bisphenol A-diglycidylether mit einem Epoxidäquivalentgewicht von 186,2 g.

<u>Epoxidharz 2:</u> Ein Epoxikresolnovolak mit einem Epoxidäquivalentgewicht von 235 g.

Epoxidharz 3: Ein festes Bisphenol A-harz mit einem Epoxidäquivalentgewicht von 380 g.

Latenter Härter 1: Eine Mischung aus
25,5 Gewichtsteilen Dicyandiamid,
12,5 Gewichtsteilen Chlortoluron [(N,N-Dimethyl-N'-(3-chlor-4-methylphenyl)harnstoff],
46,5 Gewichtsteilen Bisphenol A-diglycidylether mit einem Epoxidäquivalentgewicht von 192,3 g und
15,5 Gewichtsteilen Bisphenol A-diglycidylether mit einem Epoxidäquivalentgewicht von 222,2 g.

Latenter Härter 2: Eine Mischung aus
28 Gewichtsteilen Dicyandiamid und
72 Gewichtsteilen Bisphenol A-diglycidylether mit einem Epoxidäquivalentgewicht von 192,3 g.

Latenter Härter 3: 4,4'-Diaminodiphenylsulfon.

Die Zusammensetzungen werden durch Vermischen aller Bestandteile, gegebenenfalls unter leichtem Erhitzen, hergestellt.

Herstellung von Prepregs (PP) und Laminaten:

Ein Glasgewebe der Fa. Interglas (92146-I-550) (43 x 25 cm) wird auf einer Folie mit dem Bindemittelgemisch bei 50 °C imprägniert. Um die Luft zu entfernen und das Bindemittel optimal zu verteilen, rollt man einen Glasstab über das Prepreg. Um die B-Stufe zu erreichen, wird das Prepreg jeweils auf einer Heizplatte bei 90-120 °C während 2-10 Minuten erwärmt (vergleiche Tabelle 2). Für die Laminatherstellung wird das Prepreg in gleich grosse Teile (6,5 x 9,9 cm) geschnitten. Die Folien werden entfernt, zwölf Prepreglagen werden aufeinandergelegt und so in einer Form auf der Presse mit max. 5 MPa verpresst und bei entsprechender Temperatur ausgehärtet. Die Dicke des Laminats beträgt 3-3,3 mm. Die Prüfkörper für Messungen der Interlaminarenscherfestigkeit (vgl. Tabelle 3) werden aus dem so hergestellten Laminat geschnitten.

Die Gelierzeit bei 50 °C (vgl. Tabelle 3) wird mit einem Techne Gelation Timer GT 3 der Fa. Techne Ltd., Cambridge, U.K. bestimmt. Die Gelierzeit bei 120 °C (vgl. Tabelle 4) wird auf einer Gelierzeitheizplatte mit Automatik bestimmt. Dabei wird ein Drahtbügel (Ø 0,4 mm) durch die Substanz gezogen, bis eine bestimmte Festigkeit der Substanz erreicht wird.

Die Viskosität wird mit einem ICI Kegel-Platte Viskosimeter der Fa. Epprecht Instruments, Dottikon, Schweiz bestimmt.

Die DSC- und Tg Messungen werden mit einem Mettler Thermoanalytischen System TA 3000 vorgenommen.

Tabelle 1: Bestandteile der Zusammensetzungen und deren thermisches Verhalten

| Beispiel Nr. | 1 | 2 | 3 | 4 | 5 |
|---|---|---|---|---|---|
| Epoxidharz 1 (g) | 70 | 70 | 80 | 80 | 80 |
| Epoxidharz 2 (g) | 30 | 30 | | | |
| Epoxidharz 3 (g) | | | 20 | 20 | 20 |
| Latenter Härter 1 (g) | 37,3 | 31,5 | 34,8 | 33,8 | 33,3 |
| n-Octylamin (g) | 2,5 | | | | |
| Isophorondiamin (g) | | 2,63 | | | |
| 4,4'-Diamino-dicyclo-hexylmethan (g) | | | 2,9 | | |
| Jeffamine® EDR-148[1] (g) | | | | 2,4 | |
| 1,2-Diaminocyclohexan (g) | | | | | 2,1 |
| Triglykoldimercaptan (g) | | 5,6 | | | |
| CapCure® 3-800[2] (g) | 4,3 | | 2,82 | 2,8 | 2,8 |
| B-Stufe max (°C)[3] | 94 | 102 | 85 | 93 | 91 |
| C-Stufe max (°C)[3] | 146 | 147 | 147 | 146 | 146 |

1) $H_2N-(CH_2CH_2O)_2CH_2CH_2NH_2$ der Fa. Texaco

2) 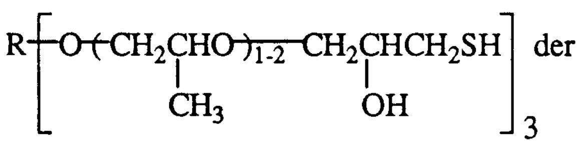 der Fa. Henkel Napco AG

3) Bestimmt mittels DSC (auf Mettler TA 3000; Heizgeschwindigkeit 10°C/min)

Tabelle 1 (Fortsetzung)

| Beispiel Nr. | 6 | 7 | 8 | 9 | 10 | 11 |
|---|---|---|---|---|---|---|
| Epoxidharz 1 (g) | 100 | 100 | 100 | 100 | 70 | 100 |
| Epoxidharz 2 (g) | | | | | 30 | |
| Latenter Härter 1 (g) | | | | | | 35,1 |
| Latenter Härter 2 (g) | 38 | | | | | |
| Latenter Härter 3 (g) | | 32,9 | | 27,4 | 6 | |
| 2,4-Bis-(N',N'-dimethylureido)toluol (g) | | | 6 | | | |
| 1,4-Bis(N',N'-dimethylureido)benzol (g) | | | | | 6 | |
| 1-Benzoyl-2-isopropylimidazol (g) | 2,3 | | | | | |
| 1-(2',4',6'-Trimethylbenzoyl)-2-phenylimidazol (g) | | | | 3 | | |
| 1-Cyanoethyl-2-ethyl-4-methylimidazol (g) | | 1,7 | | | | |
| Isophorondiamin (g) | 2,1 | 2,3 | 2 | 2,75 | 2 | 2,33 |
| CapCure® 3-800 | | 5,4 | | | | |
| Triglykoldimercaptan | 5,8 | | 7 | 4 | 7 | |
| Trimethylolpropantrithioglykolat | | | | | | 7,3 |
| B-Stufe max (°C) | 68 | 86 | 102 | 128 | 127 | 97 |
| C-Stufe max (°C) | 133 | 143 | 151 | 162 | 171 | 159 |

Tabelle 2: Raumtemperaturstabilität der Prepregs (PP)

| Zusammensetzung aus Beispiel Nr. | PP-Herstellung[1] Min./°C | Klebrigkeit bis x Tage stark | mittel | wenig | Flexibilität bis x Tage sehr gut | gut |
|---|---|---|---|---|---|---|
| 1 | 10/100 | 11 | 15 | 16 | 11 | 15 |
| 2 | 10/100 | - | 30 | 45 | 48 | 58 |
| | 5/110 | - | 30 | 45 | 45 | 50 |
| | 3/120 | - | 30 | 45 | 40 | 45 |
| 3 | 5/110 | 17 | 24 | 30 | 20 | 30 |
| 4 | 5/110 | 14 | 19 | 22 | 14 | 22 |
| 5 | 5/110 | 10 | 20 | 22 | 14 | 22 |
| 6 | 5/110 | 7 | 10 | 14 | 7 | 12 |
| 7 | 5/90 | 3 | 6 | 7 | 3 | 7 |
| 8 | 5/100 | 1 | 7 | 18 | 7 | 18 |
| 9 | 5/110 | 5 | 20 | 26 | 20 | 26 |
| | 4/120 | 5 | 12 | 18 | 12 | 18 |
| 10 | 5/100 } 3/120 } | - | 10 | 16 | 10 | 16 |
| 11 | 5/110 | 24 | 50 | 56 | 30 | 50 |

[1] Die Prepregs werden durch Erhitzen des imprägnierten Gewebes während der angegebenen Zeit und bei der angegebenen Temperatur hergestellt.

Tabelle 3: Eigenschaften der Zusammensetzungen und der gehärteten Produkte

| Zusammensetzung aus Beispiel Nr. | Biegeversuch[1] (DIN 53452) E-Modul ($N/mm^2$) | Festigkeit ($N/mm^2$) | Randfaserdehnung (%) | $T_g$[2] (°C) | ILS (ASTM-D-2344)[3] A ($N/mm^2$) | B ($N/mm^2$) | PP-Alter (Tage) | Gelierzeit[4] bei 50°C (Stunden) | Viskosität[5] bei 55°C (mPa.s) |
|---|---|---|---|---|---|---|---|---|---|
| 1 | 3473 | 143 | 4,7 | 115 | 68,2 | 66,0 | 3 | 54 | 5000 |
| | | | | | 72,0 | 69,7 | 13 | | |
| 2 | 3424 | 131 | 4,3 | 114 | 70,3 | 67,3 | 3 | 13,5 | 5600 |
| | | | | | 69,3 | 68,0 | 14 | | |
| 3 | 3191 | 116 | 4,6 | 114 | 64,0 | 60,8 | 21 | >72 | 1040 |
| 4 | 2947 | 110 | 4,2 | 104 | | | | 70 | 1120 |
| 5 | 3364 | 110 | 3,5 | 119 | 67,3 | 65,6 | 13 | 80 | 1000 |
| 6 | | | | 110 | 66,6 | 65,3 | 12 | 21,3 | 8300 (RT) |
| 7 | 3212 | 81 | 2,5 | 108 | 57,1 | 53,1 | 5 | 9,3 | 1600 |

1) Bestimmt an Formkörpern ohne Gewebe nach Härtung bei 130°C während 35 Minuten.

2) $T_g$-Onset (Mettler TA 3000) gemessen nach Härtung bei 130°C während 35 Minuten.

3) Interlaminare Scherfestigkeit gemessen an Laminaten mit einem Harzgehalt von ca. 22 Gew.-% nach Härtung bei 130°C während 35 Minuten; A gemessen nach der Härtung; B gemessen nach der Härtung und nach 1 Stunde in kochendem Wasser.

4) Gemessen mittels Techne Gelation Timer GT 3.

5) Gemessen an frisch hergestellten Zusammensetzungen.

Tabelle 4: Gelierzeit der Zusammensetzungen bei 120°C in Abhängigkeit von deren Lagerdauer bei Raumtemperatur

| 1 | | 2 | | 3 | | 4 | | 5 | |
|---|---|---|---|---|---|---|---|---|---|
| Lager-dauer | Gelierzeit [Min/sek] | Lager-dauer | Gelierzeit [Min/sek] | Lager-dauer | Gelierzeit [Min/sek] | Lager-dauer | Gelierzeit [Min/sek] | Lager-dauer | Gelierzeit [Min/sek] |
| frisch | 12'46" | frisch | 12'00" | frisch | 10'15" | frisch | 10'20" | frisch | 11'05" |
| 5 Tage | 11'11" | 3 Tage | 14'40" | 5 Tage | 14'19" | 4 Tage | 13'31" | 7 Tage | 14'37" |
| 15 Tage | 11'53" | 15 Tage | 15'06" | 16 Tage | 13'44" | 12 Tage | 12'41" | 17 Tage | 14'09" |

Tabelle 5

| Zugscherfestigkeit der Verklebungen (Härtung während 35 Minuten bei 130 ° C) von Aluminiumblechstreifen mit Prepregs in Abhängigkeit von der Lagerdauer der Prepregs bei Raumtemperatur | | |
|---|---|---|
| Lagerdauer | Zugscherfestigkeit (DIN 53283) | |
| | 1 [N/$mm^2$] | 2 [N/$mm^2$] |
| 1 Tag | 15,1 | 14,2 |
| 5 Tage | 11,9 | 11,6 |
| 9 Tage | 13,9 | 14,9 |
| 15 Tage | 12,1 | 13,2 |

Beispiel 12: Bestimmung des Harzflusses in Abhängigkeit von der Lagerdauer der Prepregs

Die Brauchbarkeit eines Prepregs wird üblicherweise anhand seines Flusses bestimmt. Wenn der Fluss zu klein ist, z.B. kleiner als 10 %, kann in der Regel ein Prepreg nicht mehr zu einem guten Laminat verpresst werden.

2 Quadratische Prepregstücke (hergestellt mit der Zusammensetzung aus Beispiel 2) von 5 cm Kantenlänge werden gewogen (= G 1), genau aufeinandergelegt und zwischen 2 Trennpapieren in eine auf 100 °C vorgewärmte Presse gelegt. Diese wird sofort bis auf einen Druck von 2 MPa geschlossen. Nach 5 Minuten wird das so entstandene Laminat der heissen Presse entnommen und das ausgeflossene Harz wird entlang des Laminatrandes abgeschnitten. Das Laminat wird wieder gewogen (= G 2). Die Gewichtsdifferenz von G 1 zu G 2 in % ausgedrückt ergibt den "Fluss".

| Lagerdauer der Prepregs bei Raumtemperatur | Harzfluss (Gew.-%) |
|---|---|
| 1 Tag | 19,3 |
| 4 Tage | 21,0 |
| 11 Tage | 20,8 |

Beispiele 13-16: Verwendung der Zusammensetzungen als Hotmelt-Reaktionskleber

Die in Tabelle 6 beschriebenen Zusammensetzungen werden nach der B-Stufen-Bildung auf ihre Lagerstabilität geprüft. Die Viskositäten (gemessen mit Viskosimeter Rheomat der Firma Contraves AG, Zürich) der Hotmelts nach verschiedenen Lagerzeiten und deren thermische und mechanische Eigenschaften sind in Tabelle 7 dargestellt, die Zugscherfestigkeiten der Verklebungen (Härtung während 30 Minuten bei 160 °C) von Aluminiumblechstreifen sind in Tabelle 8 angegeben.

Beschleuniger 1: Chlortoluron

Beschleuniger 2: Imidazolin der Formel

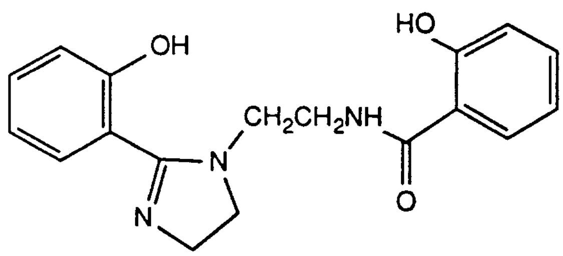

(Beispiel 1 aus der EP-A 388 359)

Beschleuniger 3: eine feste Lösung aus2,4,6-Tris-(dimethylaminomethyl)phenol und dem Phenol-Novolakharz Resin M Grade S-2 (Maruzen Petrochemical KK, Tokio), hergestellt gemäss EP-A 200 678 (Beschleuniger VIII)

Beschleuniger 4: Mannich-Reaktionsprodukt aus dem Polyvinylphenol Resin M Grade S-2 (Maruzen Petrochemical KK, Tokio), Paraformaldehyd und Dimethylamin, hergestellt gemäss EP-A 351-365 (Accelerator XI)

Tabelle 6

| Zusammensetzungen der Hotmelts | | | | |
|---|---|---|---|---|
| Beispiel | 13 | 14 | 15 | 16 |
| Epoxidharz 1 (g) | 10 | 10 | 10 | 10 |
| Dicyandiamid (g) | 1 | 0,3 | 0,96 | 0,96 |
| Beschleuniger 1 (g) | 0,05 | | | |
| Beschleuniger 2 (g) | | 1 | | |
| Beschleuniger 3 (g) | | | 0,04 | |
| Beschleuniger 4 (g) | | | | 0.04 |
| Isophorondiamin (g) | 0,11 | 0,11 | 0,11 | 0,11 |
| Triethylenglykoldimercaptan (g) | 0,25 | 0,49 | 0,49 | 0,49 |

Tabelle 7

| Eigenschaften der Hotmelts | | | | |
|---|---|---|---|---|
| Beispiel | 13 | 14 | 15 | 16 |
| Viskosität (Pas) nach Lagerung bei 40 °C | | | | |
| 1 Tag | 9,3 | 15,5 | 15,3 | |
| 12 Tage | 13,3 | | | |
| 14 Tage | | 19,1 | 15,7 | |
| 28 Tage | | 22,6 | 19,5 | |
| B-Stufe max (°C) | 111,4 | 144,5 | 111,0 | 111,5 |
| C-Stufe max (°C) | 159,9 | 160,5 | 171,5 | 182,5 |
| Gelierzeit bei 140 °C | 10'43" | 13'26" | 13'50" | 27'02" |
| Glasübergangstemperatur $T_g$ nach C-Stufe | 116 °C | 136 °C | 116 °C | 103 °C |

Tabelle 8

| Zugscherfestigkeiten der Verklebungen (DIN 53 283) nach Aushärtung (30 min/160 °C) | | | | |
|---|---|---|---|---|
| Beispiel | 13 | 14 | 15 | 16 |
| Lagerung | 40 d/RT | 1 d/40 °C | 1 d/40 °C | 1 d/40 °C |
| Zugscherfestigkeit (N/mm$^2$) | 21,1 | 20,9 | 25,8 | 25,7 |

Beispiel 17: Verwendung der Zusammensetzungen als Klebfilme

Harzkomponente: 75 g Epoxidharz 1 werden unter Rühren auf 80 - 100 °C erhitzt und anschliessend portionsweise mit 25 g fein gemahlenem Epoxidharz 2 versetzt. Es wird solange bei 80 - 100 °C weitergerührt, bis alles gelöst ist.
Härterkomponente: 23,3 g Chlortoluron, 15,2 g Triethylenglykoldimercaptan und 13,9 g Isophorondiamin werden gut vermischt. Die so erhaltene Suspension wird mit 47,6 g Dicyandiamid versetzt und im Dissolver zu einer weissen Paste dispergiert.
100 Gewichtsteile Harzkomponente werden mit 15 Gewichtsteilen Härter vermischt und auf ein Vlies (Firet 3255 EL von Lantor BV, Niederlande) aufgetragen. Nach der B-Stufen-Bildung (5 min bei 110 °C) erhält man einen Klebfilm mit einem Harzgehalt von ca. 80 %.
Die Zugscherfestigkeit (DIN 53 283) der Verklebungen von Aluminiumblechstreifen (Aushärtung 30 min bei 129 °C) beträgt 20 N/mm$^2$.

## Patentansprüche

1. Härtbares Stoffgemisch enthaltend
   (a) ein Epoxidharz,
   (b) einen latenten Härter für das Epoxidharz, der erst bei einer Temperatur von mindestens 80 °C zu reagieren anfängt (gemessen mittels DSC bei einer Aufheizgeschwindigkeit von 10 °C/min),
   (c) ein Amin mit mindestens einem Aminwasserstoff und
   (d) ein Thiol mit mindestens einer SH-Gruppe,
   wobei entweder das Amin (c) mindestens zwei an ein oder mehrere Stickstoffatome gebundene Wasserstoffatome hat oder das Thiol (d) mindestens zwei SH-Gruppen aufweist, und wobei der Unterschied der Reaktionsmaxima im DSC-Diagramm bei einer Aufheizgeschwindigkeit von 10 °C/min mindestens 30 °C beträgt.

2. Stoffgemisch nach Anspruch 1, wobei der Unterschied der Reaktionsmaxima mindestens 40 °C beträgt.

3. Stoffgemisch nach Anspruch 1 oder 2, worin das Epoxidharz (a) flüssig ist.

4. Stoffgemisch nach einem der Ansprüche 1 bis 3, worin das Epoxidharz (a) ein Diglycidylether eines Bisphenols oder ein Epoxinovolak ist.

5. Stoffgemisch nach Anspruch 4, worin das Epoxidharz (a) ein Bisphenol A-diglycidylether, ein Epoxikresolnovolak oder ein Tetraglycidylderivat von 4,4'-Diaminodiphenylmethanist.

6. Stoffgemisch nach einem der Ansprüche 1 bis 5, worin der latente Härter 4,4'-Diaminodiphenylsulfon oder Dicyandiamid ist.

7. Stoffgemisch nach einem der Ansprüche 1 bis 6, worin das Amin (c) mindestens eine $NH_2$-Gruppe hat.

8. Stoffgemisch nach einem der Ansprüche 1 bis 7, worin das Amin (c) ein cycloaliphatisches oder ein aliphatisches Amin ist.

9. Stoffgemisch nach einem der Ansprüche 1 bis 8, worin das Thiol (d) zwei oder drei SH-Gruppen aufweist.

10. Stoffgemisch nach Anspruch 9, worin das Thiol (d) ein Polyoxyalkylendithiol oder -trithiol ist.

11. Stoffgemisch nach einem der Ansprüche 1 bis 10, das zusätzlich zu den Komponenten (a) bis (d) noch (e) einen Beschleuniger für die Reaktion des Epoxidharzes (a) mit dem latenten Härter (b) enthält.

12. Stoffgemisch nach Anspruch 11, worin der Beschleuniger (e) ein Imidazol oder ein Harnstoffderivat ist.

13. Faserverbund, imprägniert mit einem Stoffgemisch nach einem der Ansprüche 1 bis 12.

14. Vernetzte Produkte erhältlich durch Härtung des Stoffgemisches nach einem der Ansprüche 1 bis 12.

15. Prepregs erhältlich durch Imprägnierung eines Gewebes mit einem Stoffgemisch nach einem der Ansprüche 1-12 und anschliessendes Erhitzen des imprägnierten Gewebes, bis die Reaktion des Epoxidharzes (a) mit dem Amin (c) und dem Thiol (d) abgeschlossen ist, und ohne dass dabei die Umsetzung des Epoxidharzes (a) mit dem latenten Härter (b) einsetzt.

16. Laminate erhältlich durch vollständige Aushärtung des Faserverbundes nach Anspruch 13 oder der Prepregs nach Anspruch 15.

17. Hotmelt-Reaktionskleber erhältlich durch Erhitzen eines Stoffgemisches nach einem der Ansprüche 1-12, bis die Reaktion des Epoxidharzes (a) mit dem Amin (c) und dem Thiol (d) abgeschlossen ist, und ohne dass dabei die Umsetzung des Epoxidharzes (a) mit dem latenten Härter (b) einsetzt.

## Claims

1. A hardenable mixture, comprising
   (a) an epoxide resin,
   (b) a latent epoxide resin hardener which starts to react only at a temperature of at least 80°C (measured by DSC at a heating rate of 10°C/minute),
   (c) an amine having at least one amine hydrogen and
   (d) a thiol having at least on SH group,

   either the amine (c) having at least two hydrogen atoms bound to one or more nitrogen atoms or the thiol (d) having at least two SH groups, and the difference between the reaction maxima in the DSC diagram at a heating rate of 10°C/minute being at least 30°C.

2. A mixture according to claim 1, wherein the difference between the reaction maxima is at least 40°C.

3. A mixture according to claim 1 or 2, wherein the epoxide resin (a) is liquid.

4. A mixture according to one of claims 1 to 3, wherein the epoxide resin (a) is a diglycidyl ether of a bisphenol or an epoxy novolak.

5. A mixture according to claim 4, wherein the epoxide resin (a) is a bisphenol A diglycidyl ether, an epoxy cresol novolak or a tetraglycidyl derivative of 4,4'-diaminodiphenylmethane.

6. A mixture according to one of claims 1 to 5, wherein the latent hardener is 4,4'-diaminodiphenyl sulfone or dicyandiamide.

7. A mixture according to one of claims 1 to 6, wherein the amine (c) has at least one $NH_2$ group.

8. A mixture according to one of claims 1 to 7, wherein the amine (c) is a cycloaliphatic or aliphatic amine.

9. A mixture according to one of claims 1 to 8, wherein the thiol (d) contains two or three SH groups.

10. A mixture according to claim 9, wherein the thiol (d) is a polyoxyalkylene-dithiol or -trithiol.

11. A mixture according to one of claims 1 to 10, which also contains, in addition to the components (a) to (d), an accelerator (e) for the reaction of the epoxide resin (a) with the latent hardener (b).

12. A mixture according to claim 11, wherein the accelerator (e) is an imidazole or a urea derivative.

13. A fibre composite, impregnated with a mixture according to one of claims 1 to 12.

14. A crosslinked product, obtainable by hardening the mixture according to one of claims 1 to 12.

15. A prepreg, obtainable by impregnation of a fabric with a mixture according to one of claims 1 to 12 and subsequent heating of the impregnated fabric until the reaction of the epoxide resin (a) with the amine (c) and the thiol (d) is complete, without simultaneous onset of the reaction of the epoxide resin (a) with the latent hardener (b).

16. A laminate, obtainable by complete hardening of the fibre composite according to claim 13 or of the prepreg according to claim 15.

17. A hot-melt reactive adhesive, obtainable by heating a mixture according to one of claims 1 to 12 until the reaction of the epoxide resin (a) with the amine (c) and the thiol (d) is complete, without simultaneous onset of the reaction of the epoxide resin (a) with the latent hardener (b).

## Revendications

1. Mélange de matières durcissables contenant
   (a) une réside époxyde,

(b) un durcisseur latent pour la résine époxyde, qui ne commence à réagir qu'à une température d'au moins 80 °C (mesurée par DSC pour une vitesse de chauffage de 10 °C/min.),
(c) une amine avec au moins un hydrogène d'amine et
(d) un thiol avec au moins un groupe SH,

où l'amine (c) a au moins deux atomes d'hydrogène liés à un ou plusieurs atomes d'azote, ou le thiol (d) présente au moins deux groupes SH, et la différence dans les maxima de réaction dans le diagramme DSC, pour une vitesse de chauffage de 10 °C/min, étant d'au moins 30 °C.

**2.** Mélange de matières selon la revendication 1, où la différence dans les maxima des réactions est d'au moins 40 °C.

**3.** Mélange de matières selon la revendication 1 ou 2, où la résine époxyde (a) est liquide.

**4.** Mélange de matières selon l'une des revendications 1 à 3, où la résine époxyde (a) est un éther diglycidylique d'un bisphénol ou une époxyde-novolaque.

**5.** Mélange de matières selon la revendication 4 où la résine époxyde (a) est un éther diglycidylique du bisphénol A, une novolaque d'époxyde-crésol ou un dérivé tétraglycidylique du 4,4'-diaminodiphénylméthane.

**6.** Mélange de matières selon l'une des revendications 1 à 5, où le durcisseur latent est la 4,4'-diaminodiphénylsulfone ou le dicyanodiamide.

**7.** Mélange de matières selon l'une des revendications 1 à 6, où l'amine (c) comporte au moins un groupe $NH_2$.

**8.** Mélange de matières selon l'une des revendications 1 à 7, où l'amine (c) est une amine cycloaliphatique ou une amine aliphatique.

**9.** Mélange de matières selon l'une des revendications 1 à 8, où le thiol (d) présente deux ou trois groupes SH.

**10.** Mélange de matières selon la revendication 9, où le thiol (d) est un polyoxyalkylène-dithiol ou -trithiol.

**11.** Mélange de matières selon l'une des revendications 1 à 10, qui contient outre les composants (a) à (d) encore un accélérateur (e) pour la réaction de la résine époxyde (a) avec le durcisseur latent (b).

**12.** Mélange de matières selon la revendication 11, où l'accélérateur (e) est un imidazole ou un dérivé de l'urée.

**13.** Matériau composite renforcé par des fibres, imprégné par mélange de matières selon l'une des revendications 1 à 12.

**14.** Produit réticulé que l'on peut obtenir par durcissement du mélange de matières selon l'une des revendications 1 à 12.

**15.** Pré-imprégnés que l'on peut obtenir par imprégnation d'un tissu avec un mélange de matières selon l'une des revendications 1 à 12, et ensuite par réchauffage du tissu imprégné jusqu'à la fin de la réaction de la résine époxyde (a) avec l'amine (c) et le thiol (d) et sans que la résine époxyde (a) réagisse pendant ce temps avec le durcisseur latent (b).

**16.** Stratifiés que l'on peut obtenir par durcissement complet du stratifié renforcé par des fibres selon la revendication 13 ou des pré-imprégnés selon la revendication 15.

**17.** Adhésif fusible réactif que l'on peut obtenir par réchauffage d'un mélange de matières selon l'une des revendications 1 à 12, jusqu'à la fin de la réaction de la résine époxyde (a) avec l'amine (c) et le thiol (d) et sans que la résine époxyde (a) réagisse pendant ce temps avec le durcisseur latent (b).